Europäisches Patentamt

European Patent Office

Office européen des brevets

(19)

(11) Publication number: **0 130 658**
**B1**

(12) EUROPEAN PATENT SPECIFICATION

(45) Date of publication of patent specification: **28.12.88**

(51) Int. Cl.⁴: **E 04 B 5/55**

(21) Application number: **84201071.2**

(22) Date of filing: **02.04.81**

(60) Publication number of the earlier application in accordance with Art. 76 EPC: **0 037 615**

(54) A suspended ceiling and coupling element for the same.

(30) Priority: **03.04.80 NL 8002018**

(43) Date of publication of application:
**09.01.85 Bulletin 85/02**

(45) Publication of the grant of the patent:
**28.12.88 Bulletin 88/52**

(84) Designated Contracting States:
**AT BE CH DE FR GB IT LI LU NL SE**

(56) References cited:
NL-A-6 905 984
US-A-3 212 741
US-A-3 898 782
US-A-4 086 480

"BLOW LINE lineaire luchtverdelers", August
1974, pages 3,4, Maars B.V., Harderwijk, NL;
"Zone 1 ceiling systems product index 1977-
78", Chicago Metallic corporation, page 25;

(73) Proprietor: **Nemaco Trading Ltd.**
**P.O. Box 255**
**St. Helier, Jersey Channel Islands (GB)**

(72) Inventor: **Smits, Johan Gerhard**
**22, Dovenetelhof**
**NL-3742 EH Baarn (NL)**
Inventor: **de Weerd, Johan Anton Theo**
**20, Torenlaan**
**NL-1261 GD Blaricum (NL)**
Inventor: **Vuyk, Cor Karel**
**28, Schans**
**NL-1261 MK Blaricum (NL)**

(74) Representative: **Konings, Lucien Marie Cornelis**
**Joseph**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a suspended ceiling as described in the preamble of claim 1.

Such a suspended ceiling is known from the catalogue of the firm Maars B.V. of Harderwijk in the Netherlands, entitled: "Blow Line lineaire luchtverdeler". In said known suspended ceiling the space arranged between the interconnected carrier girders is used for delivering fresh air or for withdrawing air.

The invention provides a simple solution for the arrangement of service lines. To this aim the invention provides a suspended ceiling as claimed in claim 1. The service line arranged in the service line channel can easily be laid, substituted and/or repaired.

The invention furthermore relates to and provides a coupling element intended for use in a ceiling according to the invention.

It should be noted that a plate-shaped coupling suspension element is known from DE-A-23 63 908 for suspending a substantially U-shaped profile in which two tabs engage the two flanges of one and the same U-profile.

The plate-shaped coupling element also has the shape of a runner. The channel formed between the limbs is not intended for use as a line channel and not useable as such, because there is no access for the lower side. This channel is shut-off by the web of this U-shaped profile. This coupling element does not engage the flanges by means of noses extending through vertical slots, in contrast they grip around bent-over rims of the flanges.

FR-A-2.086.197 describes a U-shaped coupling element which couples two carrier girders bounding a service line channel with one another in a ceiling grating, whilst also other elements are employed for completing the coupling. This known coupling structure is complicated and cannot be easily mounted.

It is noted that US-A-3,212,741 discloses a coupling element provided with means for interconnecting two carrier girders of a suspended ceiling as well as with engaging means for engaging a service line channel which is arranged between downwardly extending limbs of said coupling element. This coupling element has at the innerside of said limbs slots for engaging horizontal flanges of said service line channel. The coupling elements of this prior art suspended ceiling has just two functions, viz. the intercoupling of carrier girders and provisions for a service line channel, whereas the coupling members of present invention have four functions, viz. suspending carrier girders, intercoupling of carrier girders and provisions for a service line channel and provisions for a further service line.

The coupling elements of the prior art ceiling of above mentioned catalogue of Maars B.V. also has just two of said four functions.

It is noted that in US-A-4086480 a coupling element is disclosed, which is plate-shaped and which interconnects two carrier girders of a ceiling grating. These carrier girders are so spaced that lightening can be mounted in the space between said pair of carrier girders. At the top side of the lamp housing a channel for the service lines of the lightening is provided. The lightening apparatus hinders the access to said service line channel for using it for several purposes e.g. for plugging in telephone lines or power lines for electric machines etc. There is not provided support means at the top of the coupling elements for receiving a further service line channel.

The above mentioned and further features of the invention will be described more fully in the following description with reference to a drawing.

The drawing shows in:

Figure 1 a perspective plan view of part of an embodiment of a suspended ceiling in accordance with the invention,

Figure 2 an enlarged sectional view taken on the line II-II in figure 1,

Figure 3 a perspective view of the detail shown in figure 2,

Figure 4 on an enlarged scale detail IV of figure 3, and

Figure 5 an elevational view corresponding to figure 2 of a further variant.

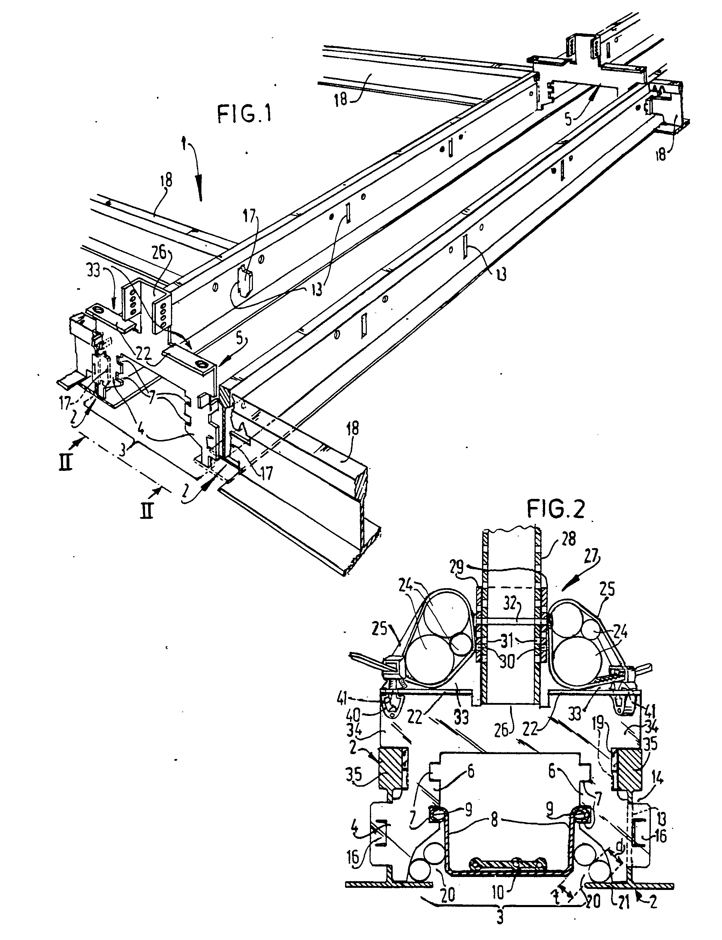

The suspended ceiling 1 of figure 1 comprises a grating of a plurality of relatively spaced, parallel carrier girders 2, only two of which are shown, said two forming a pair providing between them a space 3 for accommodating a service line channel for technical supply lines for example, electric conductors, low-voltage conductors for communication purposes, air and/or gas ducts. The carrier girders 2 of said pair are intercoupled by means of runnershaped coupling elements 5 accommodating the channel shaped space 3 between their limbs 4. The limbs 4 of each coupling element 5 have on the inner side 6 recesses 7 for receiving the bead rim of a flange 9 of a service line channel 8 in which a ribbon cable 10 is arranged. The flanges 9 are elastically flexible and their bead rims resiliently snap into opposite recesses 7 in the limbs 4. Each inclined rim 12 beneath the recesses 7 constitutes an orientating guide form facilitating mounting of the channel 8 in the coupling elements 5.

The channel 8 may be provided with welding boxes and contact boxes optionally accessible from above or below

Each limb 4 is provided with a tab 14 passed through a slot 13 of a carrier girder 2. Each tab 14 has a retension hook 16 in the form of a tong, bent out of its plane and hooking behind the web 15 of the carrier girder 2, said hook being rigidly locked when the tab 14 of a coupling element 5 can be passed through one and the same slot 13 of a carrier girder 2 as well as a tab 17 protruding from the other side of the web 15 of a transverse girder 18.

The coupling element 5 is provided with two pairs of bent-over supporting tags bearing on carrier girders and protruding pairwise from the coupling element 5 in opposite axial directions of the carrier girder 2. These supporting tags 19 prevent relative axial displacements of the carrier girders intercoupled by the coupling elements 5.

Figure 2 shows an uninterrupted, axial space on each side of the channel 8, which space is bounded by the locally bevelled limbs 4. This space 20. may accommodate for example, telephone lines 23 having elastic sheaths of a diameter d slightly exceeding the passage t between the ribbon cable 10 and the flange 21 of the carrier girder 2.

Each coupling element 5 is preferably provided with two supporting consoles 22 on the top side of the coupling element, said consoles being bent over into the horizontal plane. All kinds of lines 24 not allowed to bear on a sharp edge may be deposited on said consoles. These consoles 22 each constitute the bottom of a space of a service line channel 33, which is furthermore bounded by a head 26 provided with suspension means 27 for a hanger 28 by which the coupling element 5 may be suspended from a ceiling of a building construction. Said head 26 has two bent-over flanges 29 having fastening holes 30, which together with a series of fastening holes 31 of the hanger 28 constitute a vernier, so that the coupling element 5 can be readily suspended at any height from the hanger 28 by means of a pin 32 passed through registering holes 30 and 31. The holes 30 are located at a slightly smaller pitch distance from one another than the holes 31. The line channel 33 is furthermore bounded by known slings 25 bundling the lines 24 and extending each with an elastic, hooking foot 40 through a hole 41 of a supporting console 22. By projecting arms 34 the coupling element 5 bears on the heads 35 of carrier girders 2, which may be made from sprayed aluminium or from curved sheet material.

The coupling elements 5 according to the invention ensure a strong connection between the carrier girders 2 and provide, in addition, the space required for all kinds of service lines between the intercoupled T-section carrier girders 2 spaced apart by the size of a line channel. The carrier girders 2 and the transverse girders 18 are capable of carrying ceiling slabs (not shown).

Since the pair of carrier girders 2 are firmly fixed in their relative positions, the pair is eminently suitable for use as a carrier for apparatus such as air inlet and outlet casings, loud speakers, lighting fittings and as supports for separating partitions and technical columns.

The service line channel space 3 or the space between two carrier girders 2 can be screened by a strip 36 of elastic material.

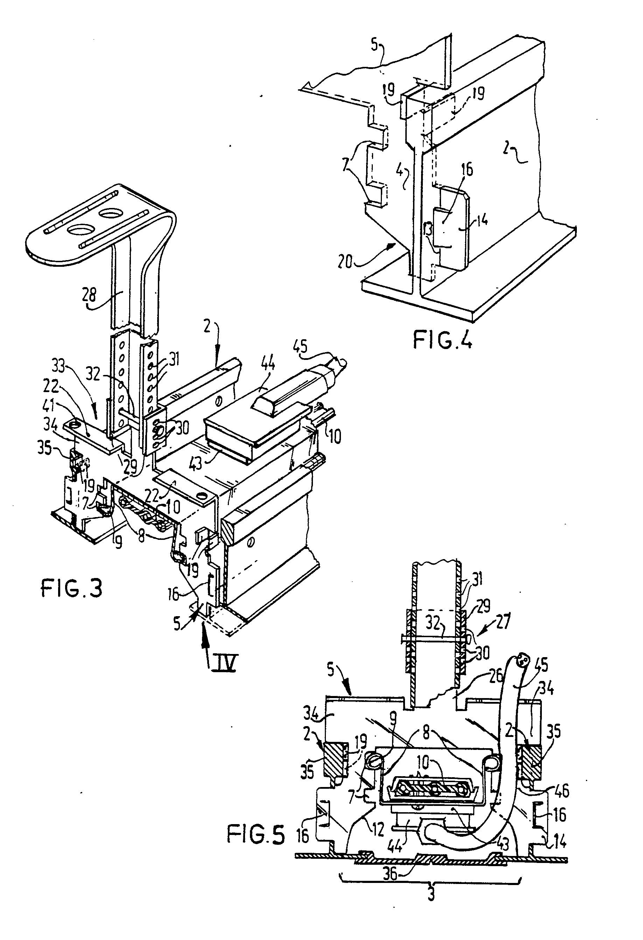

Referring to figure 3 the gutter 8 is mounted in an inverted position. Figures 3 and 5 show the ribbon cable 10 with a contact box 43 and a plug 44 arranged in the channel 8, the cable 45 passing the free space 46 between the channel 8 and the carrier girder 2 downwards and upwards respectively in a vertical sense across the channel 8.

The coupling element as described above serves both as the intercoupling to carrier girders 2 and as the suspension of the ceiling to an above lying construction e.g. building structure, ceiling. Moreover, the coupling element serves as a fastening element, which fastens the channel 8 to the carrier girders.

## Claims

1. A suspended ceiling (1) comprising a grating of spaced parallel carrier girders (2), the carrier girders (2) including at least one pair interconnected by means of coupling means, said coupling means comprising coupling elements (5) each mainly consisting of a plate having coupling means (4, 14) for intercoupling two spaced parallel carrier girders (2), said coupling means (4, 14) comprising a pair of limbs (4) which are spaced transversely and bound a space therebetween, said limbs (4) engaging the sides of the carrier girders (2) and said limbs (4) each comprising a tab (14) protruding laterally thereof and each passing through a slot (13) of a carrier girder (2), said plate having suspension means (29) for suspending said coupling element (5) on a building ceiling, characterized in that a service line channel (8) is arranged in said space bounded by said limbs (4) therebetween, in that said service line is supported by said coupling elements (5) and in that the limbs (4) of each coupling element (5) have on their inner sides engaging means (7) for engaging a service line channel (8) for receiving at least one electrical service cable, e.g. a ribbon cable (10), that the coupling elements (5) at their top sides are provided with support means (22) for receiving at least one further service line (24) and that the support means (22) for receiving at least one further service line (24) comprise at least one supporting flange (22) bent into the horizontal plane.

2. A suspended ceiling (1) as claimed in claim 1, characterized in that the support means (22) for receiving at least one further service line (24) comprise at least one hole (41) for receiving connection means (40).

3. A suspended ceiling (1) as claimed in claim 1 or 2, characterized in that flanges (9) of a service line channel (8) engage by spring action in recesses arranged at the innersides of said limbs (4) of the coupling element (5).

4. A suspended ceiling (1) as claimed in claim 3, characterized in that at least one limb (4) has on the inner edge below the recess (7) for receiving a flange (9) of the service line channel (8) an inclined part (12) for guiding an edge (9) of the service line channel into said recess (7).

5. A suspended ceiling (1) as claimed in any one of the preceding claims, characterized in that a narrow gap (T) is provided between the service line channel (8) and a carrier girder (2) for lines, said gap (T) giving access to a service line space bounded by a limb (4) of the coupling element (5) and which is uninterrupted in a longitudinal direction.

6. A suspended ceiling (1) as claimed in any one of the preceding claims, characterized in that the service line channel (8) can also be fastened in an inverted position between the limbs (4) of the coupling element (5).

7. A coupling element (5) for use in a suspended ceiling (1) as claimed in claim 1, consisting of a plate having coupling means (4, 14) for intercoupling two spaced parallel carrier girders (2), said coupling means (4, 14) comprising a pair of limbs (4) which are spaced transversely and bound a space suitable for accommodating at least one service line therebetween, said limbs (4) having side edges for engaging sides of carrier girders (2), and said limbs (4) each comprising a tab (14) protruding laterally thereof and being suitable to pass through a slot (13) of a carrier girder (2), said plate having suspension means (29) for suspending said coupling element (5) on a building ceiling, characterized by engaging means at the inner side of each of said limbs (4) for engaging supporting means (7) of a service line channel (8) to be arranged between said limbs (4), that the limbs (4) of said coupling element (5) have on their inner sides engaging means (7) for engaging a service line channel (8) for receiving at least one electrical service cable, e.g. a ribbon cable (10), that the coupling element (5) at its top side is provided with support means (22) for receiving at least one further service line (24) and that the support means (22) for receiving at least one further service line (24) comprise at least one supporting flange (22) bent into the horizontal plane.

## Patentansprüche

1. Aufgehängte Decke (1) mit einem Gitter von in einem Abstand voneinander angebrachten parallelen Balkenträgern (2), wobei die Balkenträger (2) mindestens ein Paar aufweisen, das mit Hilfe einer Verbindungsvorrichtung verbunden ist, wobei die Verbindungsvorrichtung Verbindungselemente (5) aufweist, von denen jedes hauptsächlich aus einer Platte mit Verbindungsmitteln (4, 14) zum Verbinden zweier in einem Abstand voneinander angeordneter paralleler Trägerbalken (2) besteht, wobei die Verbindungsmittel (4, 14) ein Paar von Armen (4) aufweisen, die in einem Abstand voneinander quer angeordnet sind und einen Raum zwischen sich abgrenzen, wobei die Arme (4) die Seiten der Balkenträger (2) angreifen und jeder einen Streifen (14) aufweist, der seitlich davon hervorsteht und jeder durch einen Schlitz (13) eines Balkenträgers (2) geht, wobei die Platte eine Aufhängevorrichtung (29) zum Aufhängen des Verbindungselementes (5) an einer Gebäudedecke aufweist, dadurch gekennzeichnet, daß ein Anschlußleitungskanal (8) in dem durch die Arme (4) zwischen sich abgegrenzten Raum angeordnet ist, daß die Anschlußleitung durch das Verbindungselement (5) getragen ist und daß die Arme (4) von jedem Verbindungselement (5) auf ihrer inneren Seite eine Eingriffvorrichtung (7) zum Eingreifen in einen Anschlußleitungskanal (8) zum Aufnehmen von mindestens einem elektrischen Anschlußkabel, z.B. einem Bandkabel (10) aufweisen, daß die Verbindungselemente (5) auf ihrer Oberseite mit einer Tragvorrichtung (22) versehen sind zum Aufnehmen von mindestens einer weiteren Anschlußleitung (24) und daß die Tragvorrichtung (22) zum Aufnehmen von mindestens einer weiteren Anschlußleitung (24) mindestens einen in die Horizontale gebogenen Tragflansch (22) aufweist.

2. Aufgehängte Decke (1) nach Anspruch 1, dadurch gekennzeichnet, daß die Tragvorrichtung (22) zum Aufnehmen von mindestens einer weiteren Anschlußleitung (24) mindestens ein Loch (41) zum Aufnehmen einer Verbindungseinrichtung (40) aufweist.

3. Aufgehängte Decke (1) nach Anspruch 1 oder 2, dadurch gekennzeichnet, daß Flansche (9) eines Anschlußleitungskanales (8) durch Federwirkung in Ausnehmungen eingreifen, die an der Innenseite der Arme (4) des Verbindungselementes (5) angeordnet sind.

4. Aufgehängte Decke (1) nach Anspruch 3, dadurch gekennzeichnet, daß mindestens ein Arm (4) auf der Innenkante unterhalb der Ausnehmung (7) zum Aufnehmen eines Flansches (9) des Anschlußleitungskanales (8) ein geneigtes Teil (12) zum Führen einer Kante (9) des Anschlußleitungskanales in die Ausnehmung (7) aufweist.

5. Aufgehängte Decke (1) nach einem der vor-hergehenden Ansprüche, dadurch gekennzeich-net, daß eine schmale Lücke (T) zwischen dem Anschlußleitungskanal (8) und einem Balkenträger (2) für Leitungen vorgesehen ist, wobei die Lücke (T) Zugang zu einem Anschlußleitungsraum gibt, der durch einen Arm (4) des Verbindungselementes (5) abgegrenzt ist und der in eine Längsrichtung ununterbrochen ist.

6. Aufgehängte Decke (1) nach einem der vor-hergehenden Ansprüche, dadurch gekennzeich-net, daß der Anschlußleitungskanal (8) ebenfalls in einer umgedrehten Position zwischen den Armen (4) des Verbindungselementes (5) befestigt werden kann.

7. Ein Verbindungselement (5) zur Benutzung in einer aufgehängten Decke (1) nach Anspruch 1, die aus einer Platte mit Verbindungsmitteln (4, 14) zum Verbinden zweier in einem Abstand voneinander parallel angebrachter Balken (2) besteht, wobei die Verbindungsmittel (4, 14) ein Paar von Armen (4) aufweisen, die in einem Abstand voneinander quer angeordnet sind und einen Raum zwischen sich abgrenzen, der zum Aufnehmen von wenigstens einer Anschlußleitung dazwischen geeignet ist, wobei die Arme (4) Seitenkan-ten zum Angreifen der Seiten der Trägerbalken (2) aufweisen und wobei die Arme (4) jeder einen Streifen (14) aufweisen, der sich quer dazu erstreckt und geeignet zum Durchgehen durch einen Schlitz (13) eines Trägerbalkens (2) ist, wobei die Platte eine Aufhängevorrichtung (29) zum Aufhängen des Verbindungselementes (5) an einer Gebäudedecke aufweist, gekennzeichnet durch eine Eingriffsvorrichtung auf der Innenseite von jedem Arm (4) zum Eingreifen in eine Tragvorrichtung (7) eines Anschlußleitungskanales (8), der zwischen den Armen (4) anzuordnen ist, daß die Arme (4) des Verbindungselementes (5) auf ihrer Innenseite Eingriffsvorrichtungen (7) zum Eingreifen in einen Verbindungsleitungskanal (8) zum Aufnehmen von mindestens einem elektrischen Anschlußkabel, z.B. einem Bandkabel (10) aufweisen, daß das Verbindungselement (5) auf seiner oberen Seite mit einer Tragvorrichtung (22) zum Aufnehmen von mindestens einer weiteren Anschlußleitung (24) versehen ist und daß die Tragvorrichtung (22) zum Aufnehmen von mindestens einer weiteren Anschlußleitung (24) mindestens einen in die horizontale Ebene umgebogenen Tragflansch (22) aufweist.

## Revendications

1. Plafond suspendu (1) comprenant un grillage de poutres porteuses parallèles espacées (2), les poutres porteuses (2) comprenant au moins une paire de poutres mutuellement reliées à l'aide de moyens d'accouplement, ces moyens d'accouplement comprenant des éléments d'accouplement (5) constitués chacun principalement d'une plaque possédant des moyens d'accouplement (4, 14) pour l'accouplement mutuel de deux poutres porteuses parallèles espacées (2), ces moyens d'accouplement (4, 14) comprenant une paire de branches (4) qui sont espacées transversalement et délimitent un espace entre elles, ces branches (4) s'engageant avec les côtés des poutres porteuses (2) et ces branches (4) comprenant chacune une patte (14) partant latéralement en saillie de la branche et traversant chacune une fente (13) d'une poutre porteuse (2), la plaque possédant des moyens de suspension (29) pour suspendre l'élément d'accouplement (5) à un plafond de bâtiment, caractérisé en ce qu'un conduit de ligne de branchement (8) est disposé dans l'espace délimité par les branches (4) entre elles, en ce que cette ligne de branchement est supportée par les éléments d'accouplement (5) et en ce que les branches (4) de chaque élément d'accouplement (5) possèdent sur leurs côtés intérieurs des moyens d'engagement (7) pour s'engager avec un conduit de ligne de branchement (8) destiné à recevoir au moins un câble de branchement électrique, par exemple un câble-ruban (10), en ce que les éléments d'accouplement (5) sont munis sur leurs côtés supérieurs de moyens de support (22) pour recevoir au moins une ligne de branchement supplémentaire (24), et en ce que les moyens de support (24) destinés à recevoir au moins une ligne de branchement supplémentaire (24) comprennent au moins une bride de support (22) pliée dans le plan horizontal.

2. Plafond suspendu (1) selon la revendication 1, caractérisé en ce que les moyens de support (22) destinés à recevoir au moins une ligne de branchement supplémentaire (24) comprennent au moins un orifice (41) pour recevoir des moyens de connexion (40).

3. Plafond suspendu (1) selon la revendication 1 ou 2, caractérisé en ce que des brides (9) d'un conduit de ligne de branchement (8) s'engagent par action de ressort dans des évidements disposés sur les côtés intérieurs des branches (4) de l'élément d'accouplement (5).

4. Plafond suspendu (1) selon la revendication 3, caractérisé en ce qu'au moins une branche (4) possède sur son bord intérieur, en dessous de l'évidement (7) destiné à recevoir une bride (9) du conduit de ligne de branchement (8) une partie inclinée (12) pour guider un bord (9) du conduit de ligne de branchement danscet évidement (7).

5. Plafond suspendu (1) selon l'une quelconque des revendications précédentes caractérisé en ce qu'un étroit interstice (T) est prévu entre le conduit de ligne de branchement (8) et une poutre porteuse (2) pour des lignes, l'interstice (T) donnant accès à un espace de ligne de branchement délimité par une branche (4) de l'élément d'accouplement (5) et qui est ininterrompu dans un sens longitudinal.

6. Plafond suspendu (1) selon l'une quelconque des revendications précédentes, caractérisé en ce que le conduit de ligne de branchement (8) peut également être fixée en position inversée entre les branches (4) de l'élément d'accouplement (5).

7. Elément d'accouplement à utiliser dans un plafond suspendu (1) selon la revendication 1, constitué d'une plaque possédant des moyens d'accouplement (4, 14) pour l'accouplement mutuel de deux poutres porteuses parallèles espacées (2), ces moyens d'accouplement (4, 14) comprenant une paire de branches (4) qui sont espacées transversalement et délimitent un espace adéquat pour recevoir au moins une ligne de branchement entre elles, ces branches (4) possédant des bords latéraux pour s'engager avec des côtés des poutres porteuses (2), et ces branches (4) comprenant chacune une patte (14) partant latéralement en saillie de la branche et adéquate pour traverser une fente (13) d'une poutre porteuse (2), la plaque possédant des moyens de suspension (29) pour suspendre l'élément d'accouplement (5) à un plafond de bâtiment, caractérisé par des moyens d'engagement prévus sur le côté intérieur de chacune des branches (4) pour s'engager avec des moyens de support (7) d'un conduit de ligne de branchement (8) à disposer entre les branches (4), en ce que les branches (4) de l'élément d'accouplement (5) possèdent sur leurs côtés intérieurs des moyens d'engagement (7) pour s'engager avec un conduit de ligne de branchement (8) destiné à recevoir au moins un câble de branchement électrique, par exemple un câble-ruban (10), en ce que l'élément d'accouplement (5) est muni sur son côté supérieur de moyens de support (22) pour recevoir au moins une ligne de branchement supplémentaire (24), et en ce que les moyens de support (24) destinés à recevoir au moins une ligne de branchement supplémentaire (24) comprennent au moins une bride de support (22) pliée dans le plan horizontal.

EP 0 130 658 B1

FIG.1

FIG.2

EP 0 130 658 B1

FIG.4

FIG.3

FIG.5

2